(19) Europäisches Patentamt
European Patent Office
Office européen des brevets

(11) EP 0 560 943 B1

(12) **EUROPEAN PATENT SPECIFICATION**

(45) Date of publication and mention of the grant of the patent:
**17.03.1999 Bulletin 1999/11**

(21) Application number: **92903908.9**

(22) Date of filing: **03.12.1991**

(51) Int. Cl.[6]: **A01C 1/06**, A01C 21/00, A01G 5/06, A01N 1/00, A01N 3/00, A01N 25/10

(86) International application number:
**PCT/US91/09015**

(87) International publication number:
**WO 92/10081 (25.06.1992 Gazette 1992/14)**

(54) **TEMPERATURE SENSITIVE SEED GERMINATION CONTROL**
KEIMUNGSREGELUNG VON WÄRMEEMPFINDLICHEN SAMEN
REGULATION DE LA GERMINATION DE GRAINES SENSIBLES A LA TEMPERATURE

(84) Designated Contracting States:
**AT BE CH DE DK ES FR GB GR IT LI LU NL SE**

(30) Priority: **07.12.1990 US 624891**

(43) Date of publication of application:
**22.09.1993 Bulletin 1993/38**

(73) Proprietor: **LANDEC CORPORATION**
**Menlo Park California 94025 (US)**

(72) Inventor: **STEWART, Ray, F.**
**Redwood City, CA 94061 (US)**

(74) Representative:
**Lunt, Mark George Francis et al**
**Dibb Lupton Alsop**
**Fountain Precinct**
**Balm Green**
**Sheffield S1 1RZ (GB)**

(56) References cited:
**EP-A- 0 064 379**
**US-A- 3 698 133**
**US-A- 3 808 740**
**US-A- 3 920 436**
**US-A- 4 238 523**
**US-A- 4 251 952**
**US-A- 4 344 979**
**US-A- 4 735 017**
**US-A- 4 769 945**
**US-A- 4 777 762**
**US-A- 4 780 987**
**US-A- 4 879 839**

- **Chem-Tech, Volume 8, issued May 1978, F.E. PORTER, "Coat Seeds With Polymers", pages 284-287, see entire document.**

Remarks:
The file contains technical information submitted after the application was filed and not included in this specification

EP 0 560 943 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Xerox (UK) Business Services
2.16.7/3.6

## Description

This invention relates to seeds and other organisms which have been coated with polymeric compositions.

A seed cannot germinate until it has imbibed (absorbed) a certain amount of water (a process referred to as imbibition). But unless the seed germinates within a relatively short time after imbibition, it is likely to become diseased or die. Most seeds will begin imbibition if water is present, irrespective of the soil temperature; but for each type of seed there are minimum, optimum and maximum temperatures for germination.

Various proposals have been made to coat seeds with polymeric compositions which will serve as binders for desired adjuvants (e.g. fungicides and fertilizers) and/or will slow down the imbibition process, in order to prevent imbibition until conditions are satisfactory for germination and growth. See, for example, US Patent Nos. 3,545,129, 3,698,133, 3,808,740, 3,920,436, 4,251,952 and 4,769,945, and Crop. Science 26, 1252 (Priestley and Leopold, 1986). However, the known expedients do not give fully satisfactory results. For example, US Patent No. 3,698,133 describes the application of two coatings to a seed, namely an inner, water-permeable coating and an outer coating of a material which controls water imbibition until environmental conditions are satisfactory, and then ruptures.

This invention makes use of coating polymers which undergo a temperature-dependent phase change which dramatically changes the water-permeability of the polymer. We have discovered that when such polymers are used to create seed coatings which are structurally positioned between the seed and an outside environment, they prevent imbibition at lower temperatures unfavorable to germination, but allow imbibition at higher temperatures favorable to germination. Preferably, the coatings prevent imbibition at temperatures below the optimum temperature for germination, but allow imbibition at temperatures at and above the optimum temperatures for germination. The polymers can also be used to provide temperature-sensitive coatings on other organisms, namely nematodes, bacteria and rhizobia, and organisms which are at or near the beginning of their life cycle and are in a lyophilized state.

In its first aspect, the invention provides a coated organism which is surrounded by an environment and which comprises

(1) an organism which is a seed, a nematode, a bacterium, a rhizobium, or an organism which is at or near the beginning of its growth cycle and is in a lyophilized state; and

(2) a coating which

  (a) surrounds said organism and separates it from the environment,

  (b) comprises a crystallizable polymer which has (i) a first order transition point, $T_m$, which is greater than 0°C and up to 41°C, and (ii) a heat of fusion of at least 10 J/g; and

(3) has a water permeability at $T_m$ which is at least 2 times the water permeability of the coating at a temperature below $T_m$.

The crystallizable polymer is referred to herein as the "coating polymer".

In its second aspect, the invention provides a method of growing a plant from seed which comprises planting in soil a coated seed according to the first aspect of the invention, the planting being carried out at a temperature below $T_m$; and leaving the seed in the soil until it has grown into a plant.

For each type of seed, there is a minimum, an optimum, and a maximum temperature for germination. In general, seeds will germinate at temperatures from just above 0°C to about 41°C, with germination preferably taking place at 20-35°C. Table 1 below sets out detailed information for a number of different vegetable seeds. The rate of germination varies little at optimum temperatures, but varies greatly at suboptimal temperatures. For example, 90% germination of oat seeds takes 6 to 15 days at 7°C and 4 to 6 days at 15°C. The new seed coatings can be designed so that maximum germination occurs in the minimum time, resulting in crops which are more uniform and can be more easily harvested. Other advantages resulting from use of the new seed coatings can include reduced damage caused by fungi (and reduced need for the use of fungicides); greater flexibility in the time of seed planting; earlier crops; and more uniform crops. The new seed coatings can also be designed so that germination takes place at different temperatures, and, therefore, at different times. This results in crops maturing at different times, allowing a farmer to make more efficient use of machinery and labor. The coatings can also be designed so that male and female seeds germinate at times which facilitate or prevent fertilization of the resulting plants, as desired.

Table 1

| Soil Temperatures for Vegetable Seed Germination<br>Minimum | | | | | |
|---|---|---|---|---|---|
| 34°F, 0°C | 40°F, 4°C | | 50°F, 10°C | 60°F, 16°C | |
| Endive | Beet | Parsley | Asparagus | Lima been | Okra |
| Lettuce | Broccoli | Pea | Sweet corn | Snap bean | Pepper |
| Onion | Cabbage | Radish | Tomato | Cucumber | Pumpkin |
| Parsnip | Carrot | Swiss chard | | Eggplant | Squash |
| Spinach | Cauliflower | Turnip | | Muskmelon | Watermelon |
| | Celery | | | | |
| | | | | | |
| Optimum | | | | | |
| 70°F, 21°C | 75°F, 24°C | 80°F, 27°C | 85°F, 29°C | | 95°F, 35°C |
| Celery | Asparagus | Lima bean | Snap bean | Radish | Cucumber |
| Parsnip | Endive | Carrot | Beet | Sweet corn | Muskmelon |
| Spinach | Lettuce | Cauliflower | Broccoli | Swiss chard | Okra |
| | Pea | Onion | Cabbage | Tomato | Pumpkin |
| | | Parsley | Eggplant | Turnip | Squash |
| | | | Pepper | | Watermelon |
| | | | | | |
| Maximum | | | | | |
| 75°F, 24°C | 85°F, 29°C | 95°F, 35°C | | 105°F, 41°C | |
| Celery | Lima bean | Asparagus | Eggplant | Cucumber | Squash |
| Endive | Parsnip | Snap bean | Onion | Muskmelon | Sweet corn |
| Lettuce | Pea | Beet | Parsley | Okra | Turnip |
| Spinach | | Broccoli | Pepper | Pumpkin | Watermelon |
| | | Cabbage | Radish | | |
| | | Carrot | Swiss chard | | |
| | | Cauliflower | Tomato | | |
| Source: H.T. Hartmann and D.E. Kester, 1959, Plant Propagation: Principles and Practices (Prentice-Hall). | | | | | |

Coating Polymers

The coatings used in this invention comprise a crystallizable polymer having a first order transition point, $T_m$, alternatively known as the melting point, which is greater than 0°C and up to 41°C, preferably 5 to 40°C, particularly 18 to 30°C, e.g. 21 to 35°C, with melting preferably taking place over a temperature range of less than 10°C, particularly less than 5°C. $T_m$S given herein are the endotherm peak temperatures measured by a differential scanning calorimeter (DSC) at a rate of 10°C/min. The permeability of the coating is substantially zero below the onset of melting and reaches its highest level when melting is complete. The polymer is chosen so that its melting range and its $T_m$ correlate with the temperature at which an increase in water permeability is desired, e.g. a $T_m$ of about 25°C when permeability at 25°C and above is desired. In general, the higher the crystallinity of the polymer, the greater the change in permeability at $T_m$. The polymer (below $T_m$) typically has a crystallinity of 10 to 55%, usually 15 to 50%. As discussed below,

the coating polymer can be crosslinked so that it does not flow above $T_m$. Generally, crosslinking decreases permeability at $T_m$ and above, but at the crosslinking densities needed in this invention, the permeability of the polymer remains temperature-sensitive.

Preferably, the polymer is substantially impermeable to water at temperatures below $T_m$, and has a water permeability above $T_m$ which is 4 to 10 times or more its water permeability at a temperature below $T_m$.

The polymer is preferably relatively hydrophobic and will take up less than 5% by weight of water. The molecular weight ($M_w$) of the polymer is preferably greater than 5,000 Daltons. The heat of fusion of the polymer, $\Delta H_f$, is at least 10 J/g.

The polymer is preferably a side chain crystallizable polymer as described below. Other polymers which can be used include polycaprolactone, polyethylene sebacate, polyethylene adipate, polytetrahydrofuran homo- and copolymers, polydiethyl siloxane, cis polyisoprene, cis poly-1,4-cyclohexylenedimethylene dodecanedioate, poly-decamethylene disulfide, poly-dodecamethylene adipamide, poly-tetramethylene succinate, poly-trimethylene adipate, and the like.

The preferred side chain crystallizable polymers have the formula

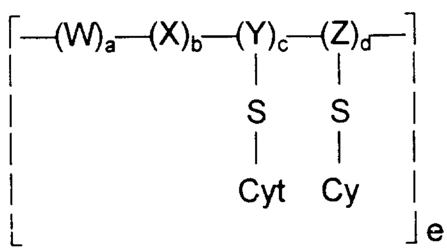

wherein W and X are each respectively a first and a second monomer unit, which monomer unit may be any molecular moiety connectable to an adjoining molecular moiety (i.e., polymerizable), Y and Z are each independently a backbone monomer unit which may be any molecular moiety or atom, each S is independently a linking group or spacer unit and is optionally present, Cyt and Cy are each independently a crystallizable moiety connected to the respective backbone directly or via the spacer unit, and a, b, c, d and e are each, independently, integers ranging from 0 to 1.000, with the proviso that sufficient Cyt and Cy are present so as to provide an $M_w$ which is equal to or greater than twice the sum of the $M_w$S of W, X, Y and Z, and further wherein the polymers have a $\Delta H_f$ of at least 10J/g. When a, b, c and d are greater than 1, W, X, Y and Z can be repeating units or mixtures of different monomer units. For example, if a is 100, W could be a mixture of styrene, vinyl acetate, acrylic acid, methyl styrene and hexadecyl acrylate in ratios of 5:5:2:5:83. Thus, any of W, X, Y and Z can be mixtures of polymerizable monomers.

The backbone of the polymer (defined by W, X, Y and Z) may be any organic structure (aliphatic or aromatic hydrocarbon, ester, ether, amide, etc.) or an inorganic structure (sulfide, phosphazine, silicone, etc.). The spacer linkages can be any suitable organic or inorganic unit, for example ester, amide hydrocarbon, phenyl, ether, or ionic salt (for example a carboxyl alkyl ammonium or sulfonium or phosphonium ion pair or other known ionic salt pair). The side-chains (defined by S, Cyt and Cy) may be aliphatic or aromatic or a combination of aliphatic side-chains of at least 10 carbon atoms, fluorinated aliphatic side-chains of at least 6 carbons, and alkyl styrene side-chains wherein the alkyl is of 8 to 24 carbon atoms.

The length of the side chain moiety is usually greater than 5 times the distance between side-chains in the case of acrylates, methacrylates, vinyl esters, acrylamides, methacrylamides, vinyl ethers and alpha olefins. In the extreme case of a fluoroacrylate alternate copolymer with butadiene, the length of the side chain can be as little as 2 times the distance between branches. In any case, the side-chain units should make up greater than 50% of the volume of the polymer, preferably greater than 65% of the volume. Comonomers added to a side chain polymer usually have an adverse effect on crystallinity. Small amounts of various comonomers can be tolerated ,usually up to 10 to 25 volume percent. In some cases it is desirable to add a small amount of comonomers, for example cure site monomers such as acrylic acid, glycidal methacrylate, maleic anhydride, amino functional monomer and the like.

Examples of SCC polymers are those described in J. Poly. Sci. Polymer Chemistry Ed., 19, 1871-1873 (1981), the acrylate, fluoroacrylate, methacrylate and vinyl ester polymers described in J. Poly. Sci. 10:3347 (1972); J. Poly. Sci. 10:1657 (1972); J. Poly. Sci. 9:3367 (1971); J. Poly. Sci. 9:3349 (1971); J. Poly. Sci. 9:1835 (1971); J.A.C.S. 76:6280 (1954); J. Poly. Sci. 7:3053 (1969); Polymer J. 17:991 (1985); corresponding acrylamide, substituted acrylamide and maleimide polymers (J. Poly. Sci., Poly. Physics Ed. 18:2197 (1980); poly ($\alpha$:-olefin) polymers such as those described in J.Poly.Sci.: Macromol. Rev. 8:117-252 (1974), and Macromolecules 13:12 (1980), poly alkylvinyl ethers, polyalkylethylene oxides such as those described in Macromolecules 13, 15 (1980), alkyphosphazene polymers, polyamino acids

such as those described in Poly. Sci. USSR 21:241 (1979), Macromolecules 18:2141 (1985), polyisocyanates such as those described in Macromolecules 12:94 (1979), polyurethanes made by reacting amine- or alcohol-containing monomers with long-chain alkyl isocyanates, polyesters and polyethers, polysiloxanes and polysilanes such as those described in Macromolecules 19:611 (1986), and p-alkylstyrene polymers such as those described in J.A.C.S. 75:3326 (1953) and J. Poly. Sci. 60:19 (1962).

The water permeability of the SCC polymer above $T_m$ is preferably at least 2 times, particularly at least 5 times, the water permeability at a temperature below $T_m$.

Seeds which can be coated

The invention can be used to coat seeds of various types, including members of the brassica family and members of the solanaceae family. Specific seeds which can be coated include corn, cotton, soybean, broccoli, cabbage, brussels sprout, bean, pea, tomato, potato, tobacco, rice, wheat, and sunflower.

In one embodiment, the coating becomes permeable to water at about 14°C and the seed is celery, parsnip, spinach, cotton, soybean, broccoli, cabbage, brussels sprout, bean, pea, tomato, tobacco, rice, wheat, or sunflower seed. In another embodiment, the coating becomes permeable to water at about 15°C and the seed is asparagus, endive, lettuce or pea seed. In another embodiment, the coating becomes permeable to water at about 20°C and the seed is lima bean, carrot, cauliflower, onion or parsley seed. In another embodiment, the coating becomes permeable to water at about 22°C and the seed is snap bean, beet, broccoli, cabbage, eggplant, pepper, radish, sweet corn, Swiss chard, tomato or turnip seed. In another embodiment, the coating becomes permeable to water at about 25°C and the seed is cucumber, muskmelon, okra, pumpkin, squash or watermelon seed.

Other Organisms Which Can Be Coated

The invention is particularly useful for coating seeds, but can also be used to coat nematodes, bacteria, and rhizobia, and organisms which are at or near the beginning of their growth cycle and are in a lyophilized state.

Coatings

In the coatings used in this invention, the coating polymer is in a form in which it separates the seed (or other organism) from the surrounding environment and is impermeable to water at temperatures substantially below $T_m$.

Dry, dormant seeds typically contain 7-14% by weight of water. If the dry seed imbibes substantial amounts of water at cooler temperatures, it is likely to undergo "imbibitional chilling injury". Preferably, therefore, the coating prevents the seed from imbibing more than 24%, particularly more than 17%, by weight of water, when exposed to water for 14 days at temperatures below the seed's minimum germination temperature. Typically, a seed requires a water content of about 60% by weight for optimum germination. Preferably, therefore, the coating permits the seed to imbibe 60% or more by weight of water when the coated seed is exposed to water for 15 hours at the seed's optimum germination temperature. If the temperature drops alter imbibition has begun, the water permeability of the coating can drop so that imbibition halts.

Preferably the coating is in a form such that it retains its shape and does not freely flow at $T_m$. This enables the coating to remain in place even if the coated seed is exposed to temperatures above $T_m$. In one such form, the polymer is crosslinked so that it is viscoelastic at $T_m$. A crosslink density of at least 0.1, particularly at least 0.5, especially at least 1, is preferred for this purpose; however, excessive crosslinking should be avoided because it can result in decreased crystallinity and impaired performance. ("Crosslink density" is the number of crosslinks per weight average molecular weight.) In terms of mole percent, the crosslinking will normally be in the range 0.01 to 10 mole percent. The $\Delta H_f$ of the crosslinked polymer is normally at least 10 J/g, preferably at least 20 J/g.

A crosslinked coating polymer can be produced in various ways. A network copolymer can be prepared by polymerizing a crystallizable monomer and a multifunctional monomer either in one or two steps. A one-step process may be used to form a coating in place, while a two-step process is useful where an intermediate processing step is necessary. A variety of multifunctional monomers (di, tri or multifunctional acrylic or methacrylic esters, vinyl ethers, esters or amides, isocyanates, aldehydes, epoxies and the like) are known in the art. These multifunctional monomers can be used on a one or two-step process depending on the desired result. Ionizing radiation, for example, beta or gamma radiation, visible or ultraviolet light, peroxides, silanes or similar cure agents, can be used to crosslink a preformed crystallizable polymer with or without added comonomers. Ionic crosslinks can be formed by, for example, reacting an acidic polymer site with a di- or trivalent metal salt or oxide to produce a complex which serves as a crosslink site. Likewise, organic salts or complexes can be prepared by methods known in the art.

The effect of crosslinking may also be obtained through the use of a block copolymer of a suitable crystallizable polymer and a second polymer which has a glass transition or first order transition point higher than the crystallizable

polymer. Such a block copolymer exhibits mechanical stability above the $T_m$ of the crystallizable polymer but below the transition of the second polymer.

It is also possible to disperse (blend homogeneously) the crystallizable polymer at high volume loadings (e.g., greater than 20%, usually 50% to 90%) in a continuous or co-continuous phase matrix material that is impermeable to water. At such high volumes, there are sufficient amounts of the dispersed crystallizable polymer to form continuous paths of crystallizable polymer through the matrix.

The crystallizable polymer can also be immobilized by creating a second polymer within or throughout the crystallizable polymer by polymerization and phase separation. For example, a noncrosslinked crystallizable polymer may be heated above its $T_m$ with a second monomer or monomer mixture and the monomer(s) caused to polymerize. In this case a supporting polymer network can be created in situ. In this case it is desirable that the second polymer created be at least partially insoluble in the crystallizable polymer, yet be of a sufficient structure to bind the crystallizable polymer into a stable form above $T_m$.

The temperature-dependent coatings can be used in combination with other materials which enhance growth and/or protect against disease and/or other harmful elements, e.g. fertilizers, plant growth regulators, insecticides, fungicides and herbicides.

Coating procedures

The coatings can be applied to seeds by one or more means known to those skilled in the art, e.g. by pan coating, direct polymerization, solvent evaporation, spray drying procedures, or U.V. curing. One or more layers can be applied.

Permeability testing

The water permeability of a particular coating polymer can be tested by standard procedures (e.g. ASTM E-96-80 and ASTM D-1643) at different temperatures, and the results used to determine whether the polymer will be useful for coating a particular seed. For example, the water permeability of a film of the coating polymer CP1 described in the Examples below was determined at 10, 20, 30 and 37°C at 11% relative humidity in accordance with ASTM D-4493 and ASTM-E104-85. The results are shown in Figure 1 of the accompanying drawings, and demonstrate that the polymer could be used to protect seeds from imbibitional chilling injury at lower temperatures and allow water permeation and unobstructed germination at higher temperatures.

EXAMPLES

The invention is illustrated by the following Examples, some of which (indicated by an asterisk *) are comparative examples. In the Examples, the various materials identified below are referred to by the abbreviations given in parenthesis after each. Lilly Miller bush bean seeds (BB); Novella II bush pea seeds (BP); Stoneville 504 cotton seeds (C); popcorn seeds (PC); acrylic acid (AA); pentadecyl acrylate (C15A); hexadecyl acrylate (C16A); octadecyl methacrylate (C18MA); octadecyl methacrylate (available under the trade name Rocryl 330 from Rohm & Haas (ROC); oxygen-free ethyl acetate (EAc); heptane (HPT); ethanol (EOH); toluene (TOL); and azo-bis-isobutyronitrile (AIBN). The coating solutions identified by abbreviations CP1-CP4, PVA and PMMA are described in detail below.

Coating solutions CP1-CP4 were made as follows. The ingredients and amounts thereof shown in Table 1 were stirred in a sealed bottle which was maintained at 60°C for the time shown in Table 1. The resulting polymer was isolated by precipitation into cold ethanol and dried in vacuo. CP1 had a $T_m$ of 29°C, a ΔHf of 59 J/g and an MW of about 175,000. The isolated polymer (2 g) was dissolved in 1:1 mixture of HPT and EAc to prepare the coating solution.

TABLE 1

| Ingredients | CP1 | CP2 | CP3 | CP4 |
|---|---|---|---|---|
| AA(g) | - | 0.5 | - | 0.75 |
| C15A (g) | 10 | - | - | - |
| C16A (g) | - | - | - | 14.5 |
| C18MA (g) | - | 10 | - | - |
| ROC (g) | - | - | 20 | - |
| AIBN (g) | 0.1 | 0.09 | 0.09 | 0.09 |

TABLE 1 (continued)

| Ingredients | CP1 | CP2 | CP3 | CP4 |
|---|---|---|---|---|
| EAc (ml) | 20 | - | - | - |
| TOL (ml) | - | 15 | 35 | 30 |
| EOH (ml) | - | 12 | - | - |
| Time (hrs) | 24 | 18 | 8 | 12 |
| PVA is a 17% w/v solution in EAc of a medium $M_w$ polyvinyl acetate available from Aldrich Chemicals. PMMA is a 17% w/v solution in EAc of polymethyl methacrylate, $M_w$ 90,000, available from Polysciences. PVA and PMMA are comparative coating solutions. | | | | |

The procedure used to coat the seeds in the Examples was as follows. The seeds were mixed with enough coating solution to wet them thoroughly, and then allowed to dry thoroughly. The seeds were thus covered with a thin continuous and adherent film of the coating polymer. In Examples 18-20, the coating was 2% by weight.

The coated seeds were tested by one of the following test procedures.

A. In Examples 1, 2, 7-12, and 13-20, a known weight ($w_o$) of dry seeds, coated or uncoated, was placed onto a wet filter paper inside a petri dish and incubated at 20°C or 30°C in an incubator having a 12-hour photoperiod. The filter paper was kept wet, and at intervals the weight of the seeds ($w_e$) was measured, and the percentage of water taken up by the seeds, $(w_e - w_o)/w_o$, was calculated.

B. In Examples 3-6, a known weight of seeds, coated or uncoated, was placed in a vial of water maintained at 10°C. At intervals, seeds were removed, blotted dry and weighed, and the percentage of water taken tip by the seeds was calculated.

Examples 1* and 2

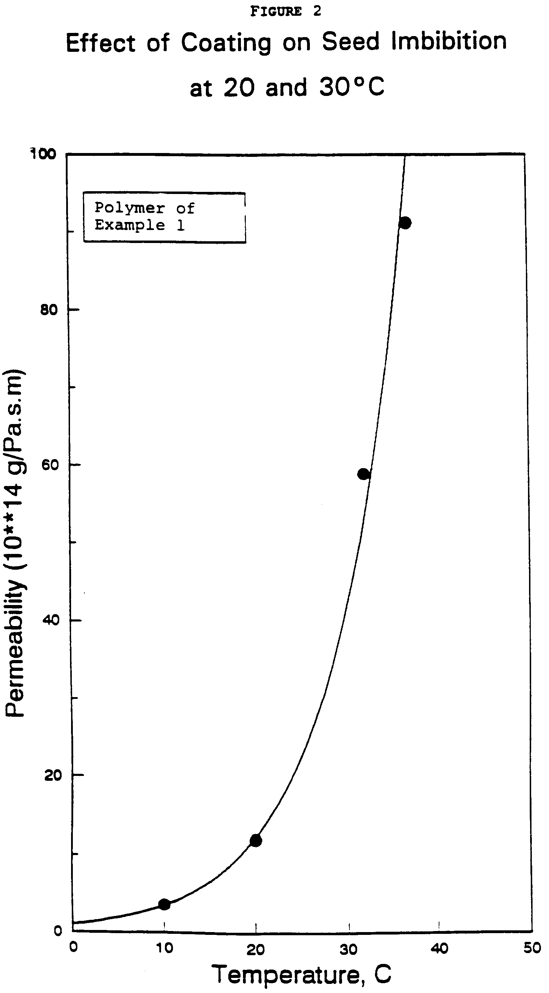

Test Procedure A was used to determine the effect of using coating solution CP1 on bush bean seeds. The results are shown in Table 2 below, and are also shown graphically in Figure 2 of the accompanying drawings. In Example 2, the % water at 30°C was measured on seeds maintained at 20°C for the first 66 hours, and thereafter maintained at 30°C.

TABLE 2

| Ex No. | Seed | Coating Solution | % water at 20°C after (hrs) | | | % water at 30°C after (hrs) | | | | |
|---|---|---|---|---|---|---|---|---|---|---|
| | | | 19 | 42 | 66 | 19 | 42 | 66 | 90 | 116 |
| 1* | BB | None | 63 | 99 | 119 | 88 | 174 | 222 | - | - |
| 2 | BB | CP1 | <1 | 3 | 5 | - | - | - | 68 | 93 |

Examples 3 and 4-6

Test procedure B was used to determine the effect of using coating solutions CP2-4 on bush bean seeds. Results are shown in Table 3 below.

TABLE 3

| Ex. No. | Seed | Coating Solution | % water after (minutes) | |
|---|---|---|---|---|
| | | | 30 | 100 |
| 3* | BB | None | 60 | 75 |
| 4 | BB | CP2 | 5 | 25 |
| 5 | BB | CP3 | 14 | 52 |

TABLE 3 (continued)

| Ex. No. | Seed | Coating Solution | % water after (minutes) | |
|---|---|---|---|---|
| | | | 30 | 100 |
| 6 | BB | CP4 | 3 | 5 |

Examples 7*,8, 9*, 10, 11* and 12

In order to determine the effect of using coating solution CP1 on the germination of various seeds, test procedure A was followed except that the results are reported in the form x/y, where x is the number of samples which germinated, and y is the total number of samples. Results are shown in Table 4 below.

TABLE 4

| Ex. No. | Seed | Coating | No. germinated (x/y) at 20°C after (days) | | No. germinated (x/y) at 30°C after (days) | |
|---|---|---|---|---|---|---|
| | | | 3 | 4 | 3 | 4 |
| 7* | BP | None | 0/6 | - | 6/6 | - |
| 8 | BP | CP1 | 0/6 | - | 5/6 | - |
| 9* | C | None | 4/7 | - | 6/7 | - |
| 10 | C | CP1 | 0/7 | - | 5/7 | - |
| 11* | PC | None | - | 7/7 | - | 7/7 |
| 12 | PC | CP1 | - | 1/7 | - | 7/7 |

Examples 13*-16*

In order to determine the effect of using comparative coating solutions PVA and PMMA on bush bean seeds, test procedure A was followed except that the results are reported in the form x/y and p/y, where x is the number of samples which had taken up more than 50% water, p is the number of samples which had sprouted, and y is the total number of samples. Results are shown in Table 5 below.

TABLE 5

| Ex No. | Seed/Coat | No. swollen (x/y) at 20°C after (hours) | | | | | | No. sprouted (p/y) at 30°C after (hours) | | | | | |
|---|---|---|---|---|---|---|---|---|---|---|---|---|---|
| | | 12 | 21 | 27 | 38 | 48 | 64 | 12 | 21 | 27 | 38 | 48 | 64 |
| 13* | BB/None | | | | | | | | | | | | |
| | at 20°C | - | - | 8/8 | - | 8/8 | 8/8 | - | - | 0/8 | - | 5/8 | 6/8 |
| | at 30°C | - | - | 8/8 | - | 8/8 | 8/8 | - | - | 5/8 | - | 6/8 | 6/8 |
| 14* | BB/PVA | | | | | | | | | | | | |
| | at 20°C | - | - | 7/8 | - | 7/8 | 8/8 | - | - | 0/8 | - | 0/8 | 0/8 |
| 15* | at 30°C | - | - | 7/8 | - | 8/8 | 8/8 | - | - | 0/8 | - | 0/8 | 2/8 |
| 16* | BB/PMMA | | | | | | | | | | | | |
| | at 20°C | 4/4 | 4/4 | - | 4/4 | - | - | 0/4 | 0/4 | - | 1/4 | - | - |
| | at 30°C | 4/4 | 4/4 | - | 4/4 | - | - | 0/4 | 0/4 | - | 0/4 | - | - |

Examples 17*-19* and 20

Test Procedure A was used to compare the effect of using comparative coating solutions PVA and PMMA and

coating solution CP1 on bush bean seeds. Results are shown in Table 6 below, which also shows the ratio R which is the ratio of (a) the average rate of water uptake by the seeds over the time period shown at 30°C to (b) the average rate of water uptake over the time period shown at 20°C.

TABLE 5

| Ex No. | Seed | Coating | % water at 20°C after 43 hours | % water at 30°C after 25.5 hours | R |
|---|---|---|---|---|---|
| 17* | BB | None | 88.3 | 102.6 | 1.96 |
| 18* | BB | PVA | 16.8 | 11.1 | 1.11 |
| 19* | BB | PMMA | 108.9 | 94.5 | 1.4 |
| 20 | BB | CP1 | 1.3 | 66.4 | 86.1 |

<u>Example 21</u>

Tetrahydrofuran and 2-methyl tetrahydrofuran were copolymerized to give a polymer having a $M_w$ of 54,000 and a $T_m$ of 28°C. A film of the copolymer 0.025 mm (0.001 inch) thick was laminated onto a microporous polypropylene support. Oxygen permeation was measured at 5, 20 and 30°C. The results are shown in Table 7 below.

TABLE 7

| $O_2$ Permeation (normal units) | | | |
|---|---|---|---|
| Film No. | at 5°C | at 20°C | at 30°C |
| 1 | 3750 | 6730 | 25,800 |
| 2 | 4780 | 7120 | 26,400 |

The $T_m$ (and the resulting permeability change) can be selected by varying the copolymer composition. A variety of chain extended polyurethanes can be prepared from crystallizable polyethers such as polytetrahydrofuran, polyethylene-oxide, their copolymers and the like. Resistance to flow above the soft segment $T_m$ may be attained by reaction with, for example, di or multifunctional isocyanates.

**Claims**

1. A coated organism which is surrounded by an environment and which comprises

    (1) an organism which is a seed, a nematode, a bacterium, a rhizobium or an organism which is at or near the beginning of its life cycle and is in a lyophilized state; and
    (2) a coating which

        (a) surrounds said organism and separates it from the environment,
        (b) comprises a crystallizable polymer which has (i) a first order transition point, $T_m$, which is greater than 0°C and up to 41°C, and (ii) a heat of fusion of at least 10 J/g, and
        (c) has a water permeability at $T_m$ which is at least 2 times the water permeability of the coating at a temperature below $T_m$.

2. A coated organism according to claim 1 wherein the crystallizable polymer has a $T_m$ of 21°C to 35°C.

3. A coated organism according to claim 1 or 2 wherein the coating retains its shape and does not freely flow at $T_m$.

4. A coated organism according to any one of the preceding claims wherein

    (a) the organism is a seed having a minimum germination temperature and an optimum germination temperature, and the crystallizable polymer has a $T_m$ which is greater than the minimum germination temperature;

(b) the water permeability of the coating at said minimum germination temperature is not sufficient to allow germination of the seed; and

(c) the water permeability of the coating at said optimum germination temperature is sufficient to allow germination of the seed.

**5.** A coated organism according to claim 4 wherein

(a) the organism is a seed of a plant listed in Table 1 herein;

(b) the water permeability of the coating at the minimum germination temperature listed in Table 1 for that plant is not sufficient to allow germination of the seed; and

(c) the water permeability of the coating at the optimum temperature listed in Table 1 for that plant is sufficient to allow germination of the seed.

**6.** A coated organism according to claim 4 or 5 wherein the coating prevents the seed from imbibing more than 17% by weight of water when exposed to water for 14 days at temperatures below the seed's minimum germination temperature, and permits the seed to imbibe 60% or more by weight of water when exposed to water for 15 hours at the seed's optimum germination temperature.

**7.** A coated organism according to any one of the preceding claims wherein the organism is a seed and the crystallizable polymer contains side chains comprising crystallizable moieties.

**8.** A coated organism according to claim 7 wherein the water permeability of the coating above $T_m$ is at least 5 times the water permeability of the coating at a temperature below $T_m$.

**9.** A coated organism according to claim 7 or 8 wherein the organism is a corn, soybean, wheat, rice, cotton, beet, pea, bean, tomato or cucumber seed.

**10.** A method of growing a plant from seed which comprises (a) planting in soil a coated seed as claimed in any one of the preceding claims, the planting being carried out at a temperature below $T_m$, and (b) leaving the seed in the soil until it has grown into a plant.

**Patentansprüche**

**1.** Beschichteter Organismus, der von einer Umwelt umgeben ist und umfaßt

(1) einen Organismus, der ein Samen, eine Nematode, ein Bakterium, ein Rhizobium oder ein Organismus, der am Beginn oder nahe am Beginn seines Lebenszyklus steht und in einem lyophilisierten Zustand vorliegt, ist und

(2) eine Beschichtung, die

(a) den Organismus umgibt und ihn von der Umwelt trennt,

(b) ein kristallisierbares Polymer umfaßt, das (i) einen übergangspunkt erster Ordnung, $T_m$, der über o °c liegt und bis zu 41 °C ist, und (ii) eine Schmelzwärme von mindestens 10 J/g aufweist, und

(c) eine Wasserdurchlässigkeit bei $T_m$ aufweist, die mindestens zweimal die wasserdurchlässigkeit der Beschichtung bei einer Temperatur unterhalb $T_m$ ist.

**2.** Beschichteter Organismus nach Anspruch 1, bei dem das kristallisierbare Polymer einen $T_m$ von 21 °C bis 35 °C aufweist.

**3.** Beschichteter Organismus nach Anspruch 1 oder 2, bei dem die Beschichtung bei dem $T_m$ ihre Gestalt behält und nicht frei fließt.

**4.** Beschichteter Organismus nach einem der vorhergehenden Ansprüche, bei dem

(a) der Organismus ein Samen ist, der eine minimale Keimungstemperatur und eine optimale Keimungstemperatur aufweist, und das kristallisierbare Polymer einen $T_m$ aufweist, der über der minimalen Keimungstemperatur liegt,

(b) die Wasserdurchlässigkeit der Beschichtung bei der minimalen Keimungstemperatur nicht ausreicht, um

eine Keimung des Samens zu erlauben, und

(c) die Wasserdurchlässigkeit der Beschichtung bei der optimalen Keimungstemperatur ausreicht, um eine Keimung des Samens zu erlauben.

**5.** Beschichteter Organismus nach Anspruch 4, bei dem

(a) der Organismus ein Samen einer Pflanze ist, die hierin in Tabelle 1 angegeben ist,
(b) die Wasserdurchlässigkeit der Beschichtung bei der minimalen Keimungstemperatur, die in Tabelle 1 für die Pflanze angegeben ist, nicht ausreicht, um eine Keimung des Samens zu erlauben, und
(c) die wasserdurchlässigkeit der Beschichtung bei der optimalen Temperatur, die in Tabelle 1 für die Pflanze angegeben ist, ausreicht, um eine Keimung des Samens zu erlauben.

**6.** Beschichteter Organismus nach Anspruch 4 oder 5, bei dem die Beschichtung den Samen daran hindert, mehr als 17 Gew.-% Wasser aufzunehmen, wenn er 14 Tage lang Wasser bei Temperaturen unterhalb der minimalen Keimungstemperatur des Samens ausgesetzt ist, und es dem Samen erlaubt, 60 Gew.-% oder mehr Wasser aufzunehmen, wenn er 15 Stunden lang Wasser bei der optimalen Keimungstemperatur des Samens ausgesetzt ist.

**7.** Beschichteter Organismus nach einem der vorhergehenden Ansprüche, bei dem der Organismus ein Samen ist und das kristallisierbare Polymer Seitenketten enthält, die kristallisierbare Anteile umfassen.

**8.** Beschichteter Organismus nach Anspruch 7, bei dem die Wasserdurchlässigkeit der Beschichtung oberhalb des $T_m$ mindestens 5mal so groß wie die Wasserdurchlässigkeit der Beschichtung bei einer Temperatur unterhalb des $T_m$ ist.

**9.** Beschichteter Organismus nach Anspruch 7 oder 8, bei dem der Organismus ein Mais-, Sojabohnen-, Weizen-, Reis-, Baumwoll-, Rüben-, Erbsen-, Bohnen-, Tomaten- oder Gurkensamen ist.

**10.** Verfahren zum Züchten einer Pflanze aus Samen, bei dem (a) ein beschichteter Samen gemäß einem der vorhergehenden Ansprüche in den Boden gepflanzt wird, wobei das Einpflanzen bei einer Temperatur unterhalb des $T_m$ durchgeführt wird, und (b) der Samen im Boden belassen wird, bis er zur Pflanze gewachsen ist.

**Revendications**

**1.** Organisme enrobé entouré par un milieu environnant et comprenant :

(1) un organisme qui est une semence, un nématode, une bactérie, un rhizobium ou un organisme qui est au début de son cycle de vie ou proche de celui-ci et qui est dans un état lyophilisé ; et
(2) un enrobage qui

(a) entoure ledit organisme et le sépare de l'environnement,
(b) comprend un polymère cristallisable qui a (i) un point de transition de premier ordre, $T_m$ qui est supérieur à 0° C, et peut aller jusqu'à 41° C, et (ii) une chaleur' de fusion d'au moins 10 J/g, et
(c) a une perméabilité à l'eau à $T_m$ qui est au moins deux fois la perméabilité à l'eau de l'enrobage à une température inférieure à $T_m$.

**2.** Organisme enrobé selon la revendication 1 dans lequel le polymère cristallisable a un $T_m$ de 21° à 35° C.

**3.** Organisme enrobé selon la revendication 1 ou 2 dans lequel l'enrobage retient sa forme et ne s'écoule pas librement à $T_m$.

**4.** Organisme enrobé selon l'une quelconque des revendications précédentes dans lequel :

(a) l'organisme est une semence ayant une température minimale et une température optimale de germination, et le polymère cristallisable a un $T_m$ qui est supérieur à la température minimale de germination ;
(b) la perméabilité à l'eau de l'enrobage à ladite température de germination minimale n'est pas suffisante pour permettre la germination de la semence ; et
(c) la perméabilité à l'eau de l'enrobage à ladite température de germination optimale est suffisante pour permettre la germination de la semence.

**5.** Organisme enrobé selon la revendication 4 dans lequel :

(a) l'organisme est une semence de plante comme indiqué au tableau 1 ci-inclus ;
(b) la perméabilité à l'eau de l'enrobage à la température de germination minimale indiquée au tableau 1 pour cette plante n'est pas suffisante pour permettre la germination de la semence ; et
(c) la perméabilité à l'eau de l'enrobage de la température optimale indiquée au tableau 1 pour cette plante est suffisante pour permettre la germination de la semence.

**6.** Organisme enrobé selon la revendication 4 ou 5 dans lequel l'enrobage empêche la semence de s'imbiber de plus de 17 % en poids d'eau lorsqu'elle est exposée pendant 14 jours à des températures inférieures à la température de germination minimale de la semence et permet à la semence de s'imbiber de 60 % ou plus en poids d'eau lorsqu'elle est exposée à de l'eau pendant 15 heures à la température de germination optimale de la semence.

**7.** Organisme enrobé, selon l'une quelconque des revendications précédentes, dans lequel l'organisme est une semence et le polymère cristallisable contient des chaînes latérales comprenant des restes cristallisables.

**8.** Organisme enrobé selon la revendication 7 dans laquelle la perméabilité à l'eau de l'enrobage à une température supérieure à $T_m$ est au moins 5 fois la perméabilité à l'eau de l'enrobage à une température inférieure à $T_m$.

**9.** Organisme enrobé selon la revendication 7 ou 8 dans lequel l'organisme est une semence de mais, soja, blé, riz, coton, betierave, petit pois, haricot, tomate ou concombre.

**10.** Méthode de culture d'une plante à partir d'une semence, qui comprend les étapes consistant à (a) planter dans le sol une semence enrobée selon l'une quelconque des revendications précédentes, la plantation étant effectuée à une température inférieure à $T_m$ et (b) laisser la semence dans le sol jusqu'à ce qu'elle ait poussé pour former une plante.

FIGURE 1

Water Vapor Permeability of Films
as Measured by ASTM E-96-80

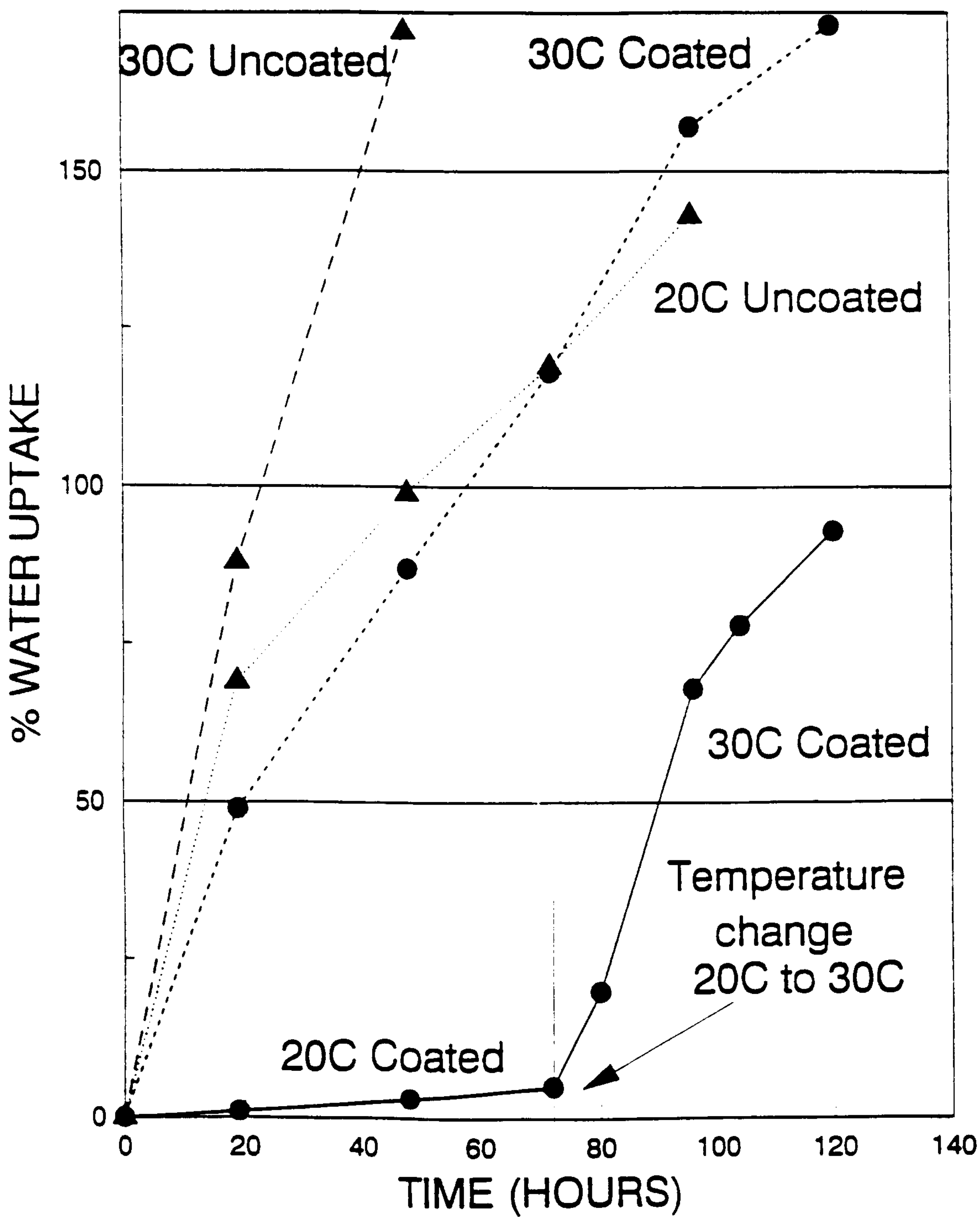

FIGURE 2

Effect of Coating on Seed Imbibition

at 20 and 30°C